# EUROPÄISCHE PATENTSCHRIFT

(11) **EP 2 682 865 B1**
(45) Veröffentlichungstag und Bekanntmachung des Hinweises auf die Patenterteilung: **30.05.2018**
(21) Anmeldenummer: 12005020.8
(22) Anmeldetag: 05.07.2012
(51) Int. Cl.: G06F 8/51, G06F 21/62

(54) **Verfahren zur Kommunikation mit einem Steuerprogramm eines Steuergeräts sowie Applikationsmodule dazu**
Method for communicating with a control programme of a control device and application modules for same
Procédé de communication avec un programme de commande d'un dispositif de commande ainsi que module d'application associé

(43) Veröffentlichungstag der Anmeldung: 08.01.2014
(73) Patentinhaber: Vector Informatik GmbH, 70499 Stuttgart (DE)
(72) Erfinder: Grauel, Herwin, 71735 Eberdingen (DE)
(74) Vertreter: Patentanwälte Bregenzer und Reule Partnerschaftsgesellschaft mbB

(56) Entgegenhaltungen:
- WO-A1-00/77596
- WO-A1-99/01815
- WO-A1-2012/040383

## Beschreibung

Die Erfindung betrifft ein Verfahren zur Datenkommunikation eines Quell-Applikationsmoduls mit einem Steuergerät eines Kraftfahrzeugs. Die Erfindung betrifft ferner ein Quell-Applikationsmodul sowie ein Ziel-Applikationsmodul zur Durchführung des Verfahrens.

Aus WO 2012/040383 A1 geht ein Verfahren hervor, ein Computerprogramm durch eine Datentransformation in transformierte Codesegmente zu transformieren.

Aus WO 99/01815 A1 geht ein Verfahren zur Verschleierung von Software anhand von Datentransformationen hervor.

WO 00/77596 A1 beschreibt eine Software sowie eine Hardware zur zufälligen Einführung von redundanten Argumenten in den Datenfluss eines Softwareprogramms.

Zum Betreiben eines Kraftfahrzeugs werden heutzutage üblicherweise Steuergeräte eingesetzt, auf denen Steuerprogramme laufen, die eine Funktion des Kraftfahrzeugs steuern und/oder überwachen. In der Regel sind die Steuergeräte miteinander vernetzt bzw. über einen Bus miteinander verbunden, z.B. einen CAN-Bus (Controler Area Network). Auch auf anderen technischen Gebieten werden Steuergeräte verwendet, beispielsweise zur Steuerung von Funktionen eines Flugzeugs oder dergleichen. Die jeweiligen Steuerprogramme werden häufig bei Zulieferern entwickelt, zum Beispiel in einem Quell-System, und bei den Endkunden dann auf einem Zielsystem, nämlich dem Steuergerät, eingesetzt.

Zu Testzwecken, zur Analyse oder zum Beeinflussen des Steuerprogramms wird ein Applikationsmodul verwendet, das mit dem Steuergerät zum Auslesen von Daten oder zum Verändern von Daten bzw. Modifizieren von Daten in dem Steuergerät kommuniziert. Unter anderem damit das Applikationsmodul an der richtigen Stelle, nämlich dem entsprechenden Speicherbereich in einem Speicher des Steuergeräts, der vom Steuerprogramm genutzt wird, Daten lesen und/oder schreiben kann, erstellt der Zulieferer eine Beschreibungsdatei, in welcher Parameternamen der einzelnen Parameter oder Parameterstrukturen des Steuerprogramms stehen sowie in der Regel auch zusätzliche Daten, beispielsweise Informationen über den jeweiligen Datentyp, Umrechnungsregeln von Binärwerte auf Realwerte eines Parameters oder dergleichen.

Das Applikationsmodul, zum Beispiel ein von einem Personalcomputer ausführbares Programm, kann anhand der Beschreibungsdatei mit dem Steuergerät kommunizieren, um Daten im Steuergerät-Speicher beispielsweise auszulesen oder zu ändern. Das Applikationsmodul kann beispielsweise direkt mit dem Steuergerät über ein sogenanntes Kalibrierungsprotokoll kommunizieren. Nun ist es möglich, dass der Zulieferer die Beschreibungsdatei an den Endkunden sendet, so dass der Endkunde mit seinem Applikationsmodul das Steuergerät testet. Dagegen spricht allerdings, dass in der Beschreibungsdatei in der Regel sogenannte sprechende Parameternamen verwendet werden, d.h. dass beispielsweise ein Parameter Drehzahl heißt, ein anderer Parameter Durchschnittsgeschwindigkeit oder dergleichen. Somit kann der Endkunde aus den Parameternamen und den zusätzlich zu den Parameternamen vorhandenen Informationen in der Beschreibungsdatei Rückschlüsse auf die Eigenschaften des Steuerprogramms ziehen, was in der Regel unerwünscht ist.

Es ist daher die Aufgabe der vorliegenden Erfindung, eine Analyseumgebung für ein Steuergerät bereitzustellen, die eine anonyme Messung und/oder Modifikation von Daten in einem von einem Steuerprogramm genutzten Speicherbereich in einem Speicher des Steuergeräts bereitzustellen.

Zur Lösung der Aufgabe sind ein Verfahren gemäß der technischen Lehre des Anspruchs 1 sowie ein Quell-Applikationsmodul gemäß Anspruch 11 und ein Ziel-Applikationsmodul gemäß Anspruch 12 vorgesehen. Das jeweilige Applikationsmodul, beispielsweise das Quell-Applikationsmodul und/oder das Ziel-Applikationsmodul, weist zweckmäßigerweise Programmcode auf, der von einem Prozessor eines Systems, zum Beispiel eines Personalcomputers, ausgeführt werden kann. Selbstverständlich kann das jeweilige Applikationsmodul auch zumindest teilweise in Hardware ausgestaltet sein, das heißt dass es zum Beispiel eine Einschubkarte für einen Personalcomputer oder ein über eine Schnittstelle, zum Beispiel eine USB-Schnittstelle, ankoppelbares Bauteil umfasst. Ein erfindungsgemäß ausgestaltetes System kann sowohl das Quell-Applikationsmodul als auch das Ziel-Applikationsmodul umfassen. Es versteht sich, dass es zwar zweckmäßig ist, jedoch nicht unbedingt notwendig, dass auch das Quell-Applikationsmodul das Kalibrierungsprotokoll beherrscht, das heißt dass das Quell-Applikationsmodul beispielsweise direkt mit dem Steuergerät kommunizieren könnte. Allerdings ist es vorteilhaft, wenn das Quell-Applikationsmodul und das Ziel-Applikationsmodul identisch oder zumindest teilweise gleichartig sind, um ein insgesamt kompatibles System bereitzustellen.

Wenn ein erfindungsgemäßes System nur zum Auslesen von Parametern aus dem Steuergerät-Speicher oder nur zum Einschreiben von Parametern in den Steuergerät-Speicher vorgesehen ist, kann die Steuerinformation auch entfallen oder eine Art implizite Steuerinformation sein. Es ist auch möglich, dass die Steuerinformation nur dann geschrieben wird, wenn in den Steuergerät-Speicher eingeschrieben werden soll, während die Steuerinformation bei reinen Leseoperationen nicht notwendig ist - oder umgekehrt.

Das Quell-Applikationsmodul bzw. das Ziel-Applikationsmodul sind zweckmäßigerweise zu den in den abhängigen Ansprüchen jeweils bezüglich der Funktion des jeweiligen Applikationsmoduls angegebenen Schritten ausgestaltet.

Es ist ein Grundgedanke der vorliegenden Erfindung, dass nicht die Beschreibungsdatei selbst vom Ziel-Applikationsmodul dazu genutzt wird, um mit dem Steuergerät zum Auslesen oder zum Modifizieren von dessen Steuergerät-Speicher zu kommunizieren, sondern dass dem Ziel-Applikationsmodul zu diesem Zweck nur eine anonymisierte und vorteilhaft in ihrem Umfang reduzierte Konfigurationsdatei bereitgestellt wird. Es werden also beispielsweise nicht sämtliche Parameter, die die Beschreibungsdatei enthält, in der die Konfigurationsdatei gepackt, sondern nur Anonym-Bezeichner derjenigen Parameter und zugeordnete Informationen, die tatsächlich von Interesse sind.

Der Parameternamen ist also beispielsweise zunächst ein symbolischer Namen, der von dem Quell-Applikationsmodul in einen Anonym-Bezeichner umgewandelt wird, so dass für das Ziel-Applikationsmodul bzw. dessen Bediener nicht mehr erkennbar ist, um welchen Parameter es sich ursprünglich gehandelt hat. Unter dem Begriff Datengröße sei auch verstanden, dass beispielsweise in der Konfigurationsdatei ein Datentyp angegeben wird, d.h. dass beispielsweise der Datentyp die Datengröße definiert. Wenn also beispielsweise zu dem Anonym-Bezeichner eine Speicheradresse und ein Datentyp angegeben wird, weiß das Ziel-Applikationsmodul sozusagen, wie groß Umfang des Datenbereiches ist, der dem Anonym-Bezeichner zugeordnet ist.

An dieser Stelle sei erwähnt, dass es selbstverständlich vorteilhaft ist, wenn in der Konfigurationsdatei nicht nur ein Parameter anonym mit Speicheradresse und Datengröße angegeben ist, sondern vorzugsweise zwei oder mehrere Parameter aus der Beschreibungsdatei angegeben sind.

Die Beschreibungsdatei ist beispielsweise eine sogenannte ASAP2-Datei oder A2L-Datei, genauer ASAM MCD-2MC-Datei, zur Beschreibung von Kalibrierdatenstrukturen für Applikationssysteme. Die entsprechenden Definitionen für diese Dateien stammen von der ASAM e. V. (Association for Standardization of Automation and Measuring Systems).

Das Kalibrierungsprotokoll ist beispielsweise ein CCP-Protokoll (CAN Calibration protocol) oder ein auf CAN (Controller Area Network) oder Ethernet oder Flexray oder dergleichen basierendes oder übertragbares XCP-Protokoll (eXtended Calibration protocol). Das X bei XCP steht beispielhaft für verschiedene als Grundlage bzw. Basis verwendete Protokolle, nämlich beispielsweise Ethernet, Flexray, CAN oder dergleichen.

Die Kommunikation kann sozusagen nur vom Quell-Applikationsmodul in Richtung zum Ziel-Applikationsmodul bzw. Steuergerät erfolgen, wenn ein jeweiliger Parameter nur modifiziert wird. Eine bevorzugte Lösung sieht jedoch vor, dass auch in Gegenrichtung eine Datenübertragung erfolgt. Darunter soll insbesondere verstanden werden, dass im Steuergerät-Speicher enthaltene Daten vom Steuergerät zum Ziel-Applikationsmodul und zweckmäßigerweise vom Ziel-Applikationsmodul zum Quell-Applikationsmodul übertragen werden. Selbstverständlich ist es vorteilhaft und in der Regel auch üblich, dass beispielsweise das Kalibrierungsprotokoll bidirektional ist, d.h. dass das Ziel-Applikationsmodul mit dem Steuergerät bidirektional kommuniziert. Z.B. wird ein Steuerbefehl zum Einschreiben eines Parameters in den Steuergerät-Speicher vom Steuergerät mit einer entsprechenden Quittung quittiert. In dieser Quittung oder einer nachfolgenden Nachricht kann, muss aber nicht, der geänderte Parameterwert enthalten sein.

Das Ziel-Applikationsmodul ist dazu ausgestaltet, von dem Steuergerät eine Meldung in dem Kalibrierungsprotokoll zu erhalten, wobei in der Meldung dem mindestens einen zu lesenden Parameter zugeordnete Meldedaten aus dem Steuergerät-Speicher enthalten sind. Bei der Meldung kann es sich beispielsweise um eine Rückmeldung handeln, ob ein zuschreiben der Parameter korrekt in einen Bereich des Steuergerät-Speichers eingeschrieben worden ist. Es ist aber auch möglich, dass die Meldung zu lesende Parameterdaten aus dem Steuergerät-Speicher enthält, ohne dass zuvor durch das Ziel-Applikationsmodul einen Steuerbefehl zum Modifizieren des Steuergeräts-Speichers gesendet worden war.

In einem weiteren Schritt ist es vorgesehen, dass das Ziel-Applikationsmodul eine Messdatei an das Quell-Applikationsmodul überträgt bzw. zu deren Übertragung ausgestaltet ist, wobei in der Messdatei die dem mindestens einen Parameter oder weiteren Parametern zugeordnete Meldedaten enthalten sind. Die Messdatei enthält also beispielsweise ein Mess-Protokoll enthaltend mehrere Parameter, Kurvenverläufe oder Messwert-Verläufe oder dergleichen. Die Messdatei enthält jedoch nicht die detaillierten Parameternamen und Zusatzinformationen, die in der Beschreibungsdatei enthalten sind, sondern beispielsweise nur sozusagen verschleierte Messdaten, eventuell zugeordnete Anonym-Bezeichner oder dergleichen. Aus der Messdatei kann also kein Rückschluss auf die Eigenschaften des Steuerprogramms gezogen werden.

Das Quell-Applikationsmodul ist dazu ausgestaltet, die Meldedaten an einer Bedienoberfläche auszugeben. Beim Ziel-Applikationsmodul
kann eine derartige Ausgabe auch vorteilhaft sein, damit ein vor Ort befindlicher Bediener sieht, was das Steuergerät an das Ziel-Applikationsmodul versendet hat.

Beim Quell-Applikationsmodul ist die Anzeige der Meldedaten im Kontext mit den zugeordneten Parametern für den jeweiligen Bediener vorteilhaft, so dass er nämlich den Parameter und zweckmäßigerweise direkt im Zusammenhang mit diesem dessen jeweiligen Wert sieht. Es ist vorteilhaft, wenn das Quell-Applikationsmodul dazu ausgestaltet ist, den Parameternamen zu den dem mindestens einen Parameter zugeordneten Meldedaten anhand der Beschreibungsdatei zuzuordnen. Somit reichert das Quell-Applikationsmodul die Meldedaten sozusagen wieder um die Informationen der Beschreibungsdatei an, was die Analyse durch den Bediener erleichtert. Die Meldedaten erhalten somit beispielsweise wieder einen sprechenden Parameternamen oder mehrere sprechende Parameternamen, so dass sie besser verständlich sind.

Selbstverständlich können in diesem Zusammenhang auch weitere Informationen den Meldedaten zugeordnet werden. Beispielsweise kann das Quell-Applikationsmodul den Meldedaten den Parametertyp, eine physikalische Größe oder eine sonstige Information des Parameters zuordnen.

Auch eine grafische Aufbereitung, z.B. ein Einordnen der Meldedaten des mindestens einen Parameters in eine durch die Beschreibungsdatei definierte überlagerte Datenstruktur oder Anzeigestruktur, ist vorteilhaft.

Eine bevorzugte Lösung sieht vor, dass die Meldedaten anhand einer Instruktion der Beschreibungsdatei vom Quell-Applikationsmodul umgewandelt werden. Die Meldedaten enthalten beispielsweise Rohdaten, die vom Quell-Applikationsmodul anhand einer Instruktion der Beschreibungsdatei in physikalische Daten umgewandelt werden und somit besser verständlich sind. So wird beispielsweise ein Drehzahlwert anhand der Rohdaten erzeugt. Bei der Umwandlung kann beispielsweise ein Multiplikator verwendet und/oder ein Differenzwert gebildet werden oder dergleichen.

Zweckmäßigerweise ist also das Quell-Applikationsmodul dazu ausgestaltet, eine Messdatei anhand der Beschreibungsdatei mit Eigenschaften der Parameter so anzureichern, dass die Messdatei oder die daraus generierten, beispielsweise an einer Bedienoberfläche des Quell-Applikationsmoduls angezeigten Daten, dieselbe Qualität hat, als hätte das Quell-Applikationsmodul selbst mit dem Steuergerät zur Ermittlung der Daten kommuniziert. Für den Nutzer des Ziel-Applikationsmoduls ist jedoch nicht ersichtlich, was er im Steuergerät tatsächlich gemessen oder verändert hat.

Wenn das Quell-Applikationsmodul nur eine einzige Konfigurationsdatei an das Ziel-Applikationsmodul sendet, ist eine eindeutige Zuordnung von Konfigurationsdatei und eventuell zurückgemeldeter Messdatei zu der Beschreibungsdatei möglich. Beispielsweise wenn mehrere Beschreibungsdateien im Einsatz sind, ist das nachfolgende Verfahren vorteilhaft:
Weiterhin ist es vorteilhaft, wenn in der Konfigurationsdatei der Name der Beschreibungsdatei oder ein sonstiger Identifizierer für die Beschreibungsdatei angegeben ist, so dass eine vom Ziel-Applikationsmodul an das Quell-Applikationsmodul zurück gesendete Messdatei der Beschreibungsdatei zugeordnet werden kann. Diese Messdatei enthält nämlich zweckmäßigerweise den Namen der Beschreibungsdatei oder einen sonstigen, zum Beispiel den vorgenannten Identifizierer der Beschreibungsdatei.

Im Sinne einer Verschleierung, was tatsächlich im Steuergerät zu messen oder zu analysieren ist, wirkt die nachfolgende Maßnahme: Erfindungsgemäß ist vorgesehen, dass das Quell-Applikationsmodul dazu ausgestaltet ist, in der Konfigurationsdatei einen gegenüber der Datengröße des mindestens einen Parameters größeren aus dem Steuergerät-Speicher auszulesenden Datenbereich einzugeben. Dieser Datenbereich schließt sich beispielsweise oben und/oder unten an den durch die Speicheradresse des mindestens einen Parameters adressierbaren und durch dessen Datengröße definierten Bereich des Steuergerät-Speichers unmittelbar an. Somit enthält also beispielsweise die Messdatei mehr Daten als notwendig. Dafür wird jedoch nicht ersichtlich, welche der Daten tatsächlich für das Quell-Applikationsmodul von Interesse sind.

Vorteilhaft ist es in diesem Zusammenhang, wenn das Quell-Applikationsmodul anstelle der Speicheradresse des mindestens einen Parameters eine Speicheradresse in dem erweiterten Datenbereich in der Konfigurationsdatei angibt. Mithin handelt es sich beispielsweise bei der Adressangabe, die dem Anonym-Bezeichner zugeordnet ist, um diese alternative Speicheradresse.

Das Quell-Applikationsmodul ist vorteilhaft dazu ausgestaltet, ein Auswahlmenü zur Auswahl des mindestens einen Parameters (oder weiteren Parameter, an einer grafischen Bedienoberfläche bereitzustellen. So erzeugt das Quell-Applikationsmodul beispielsweise ein Fenster auf einem Windows-Rechner.

Der mindestens einen Parameter bildet zweckmäßigerweise einen Bestandteil einer Speicherstruktur. An der grafischen Bedienoberfläche wird vom Quell-Applikationsmodul eine Auswahl oder ein Auswahlmenü bereitgestellt, um den mindestens einen Parameter, vorteilhaft auch weitere, zum Beispiel einen zweiten Parameter, auszuwählen derart, dass in der Konfigurationsdatei nur ein Teil der Speicherstruktur zum Modifizieren und/oder Auslesen aus dem Steuergerät-Speicher angegeben wird. Somit wird also selektiv aus der Speicherstruktur nur ein Teil herausgegriffen, der dann sozusagen in der Konfigurationsdatei wiedergegeben ist. Dies reduziert zum einen die Menge der zu messenden oder zu modifizierenden Daten im Steuergerät, hat aber auch den Vorteil, dass für den Nutzer des Ziel-Applikationsmoduls noch undeutlicher wird, was tatsächlich von Interesse ist.

Das Quell-Applikationsmodul ist vorteilhaft dazu ausgestaltet, in der Konfigurationsdatei mindestens eine Triggerbedingung für den zu messenden mindestens einen Parameter anzugeben. Selbstverständlich ist zu der Triggerbedingung auch ein Vorlauf oder zeitlicher Nachlauf möglich. Beispielsweise handelt es sich bei der Triggerbedingung um einen Grenzwert, um einen Verlauf, einen Gradienten oder dergleichen. Das Ziel-Applikationsmodul ermittelt die zu messenden Daten anhand der Triggerbedingung. Es ist auch möglich, dass das Ziel-Applikationsmodul die Triggerbedingung im Rahmen des mindestens einen Steuerbefehls, d.h. also auf Basis des Kalibrierungsprotokolls, an das Steuergerät überträgt. Es ist aber auch möglich, dass das Steuergerät eine größere Datenmenge an das Ziel-Applikationsmodul überträgt, welches seinerseits dann anhand der mindestens einen Triggerbedingung aus den vom Steuergerät erhaltenen umfangreichen Daten die Meldedaten sozusagen extrahiert.

Zwar ist es möglich, dass das Quell-Applikationsmodul den Anonym-Bezeichner anhand einer zufälligen Bedingung erzeugt. Vorteilhaft ist jedoch vorgesehen, dass das Quell-Applikationsmodul eine Konvertierungsregel zur Erzeugung des Anonym-Bezeichner verwendet. Beispielsweise erzeugt das Quell-Applikationsmodul den Anonym-Bezeichner anhand der Speicheradresse und vorzugsweise der Datengröße und/oder des Datentyps des mindestens einen Parameters. Es versteht sich, dass auch eine Zuordnungstabelle beim Quell-Applikationsmodul gespeichert sein kann, in welcher dann zum einen der Parameternamen des mindestens einen Parameters, zum andern ein diesem zugeordneter Anonym-Bezeichner abgelegt ist.

Mit dem Steuerbefehl - es können auch mehrere Steuerbefehle im Rahmen der Kommunikation zwischen Ziel-Applikationsmodul und Steuergerät versendet werden - kann beispielsweise ein einzelner Datenbereich im Steuergerät-Speicher ausgelesen oder modifiziert werden. Das Steuergerät antwortet beispielsweise mit einer einzigen Rückmeldung auf dem Steuerbefehl. Mit dem Steuerbefehl kann aber auch eine wiederholte Übertragung von Meldungen vom Steuergerät zum Ziel-Applikationsmodul angestoßen werden, zum Beispiel eine zyklische Übertragung innerhalb von bestimmten Zeitabständen, eine Übertragung bei Erreichen eines Triggerereignisses oder dergleichen

Das Quell-Applikationsmodul und das Ziel-Applikationsmodul müssen nicht direkt miteinander verbunden sein. Es ist beispielsweise möglich, die Konfigurationsdatei über das Internet oder eine sonstige Kommunikationsleitung vom Quell-Applikationsmodul zum Ziel-Applikationsmodul zu übertragen. Auch die Übertragung mittels eines Datenträgers, beispielsweise eines USB-Sticks oder dergleichen, ist selbstverständlich möglich. Auch die Rückmeldung vom Ziel-Applikationsmodul zum Quell-Applikationsmodul, beispielsweise eine Messdatei, kann auf einem physikalischen Speicher oder über ein Datennetz übertragen werden.

Man kann also auch sagen, dass der Schritt der Übertragung der Konfigurationsdatei vom Quell-Applikationsmodul zum Ziel-Applikationsmodul oder auch die umgekehrte Übertragung einer Messdatei oder sonstiger Daten vom Ziel-Applikationsmodul zum Quell-Applikationsmodul voraussetzt, dass das jeweilige Applikationsmodul Sendemittel zum Senden oder Schreiben der jeweiligen Datei und Empfangsmittel zum Empfangen oder Einlesen der jeweiligen Datei aufweist. Weiterhin soll der Begriff Datei allgemein verstanden werden und auch denjenigen Fall umfassen, dass anstelle einer umfangreichen Datei beispielsweise einzelne Konfigurationsdaten vom Quell-Applikationsmodul zum Ziel-Applikationsmodul versendet werden bzw. in umgekehrter Richtung einzelne Messdaten vom Ziel-Applikationsmodul an das Quell-Applikationsmodul versendet werden und das jeweils empfangende Modul selbstverständlich geeignete Empfangsmittel aufweist. Beispielsweise kommunizieren die Applikationsmodule über das Internet direkt miteinander.

Nachfolgend wird ein Ausführungsbeispiel der Erfindung anhand der Zeichnung erläutert. Es zeigen:
- Figur 1: ein erfindungsgemäßes System mit einem Quell-Applikationsmodul und einem Ziel-Applikationsmodul jeweils als ein von einem Personalcomputer ausgeführtes Programmmodul in Kommunikation mit einem Steuergerät eines Kraftfahrzeugs,

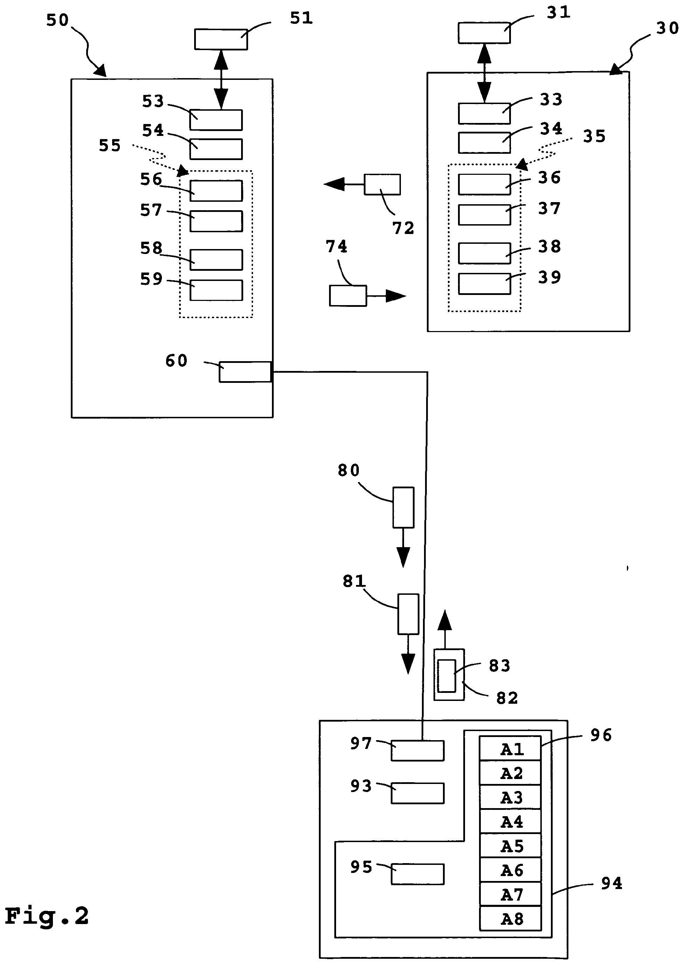

- Figur 2: eine schematische Ansicht des Quell-Applikationsmoduls, des Ziel-Applikationsmoduls sowie des Steuergeräts gemäß Figur 1,

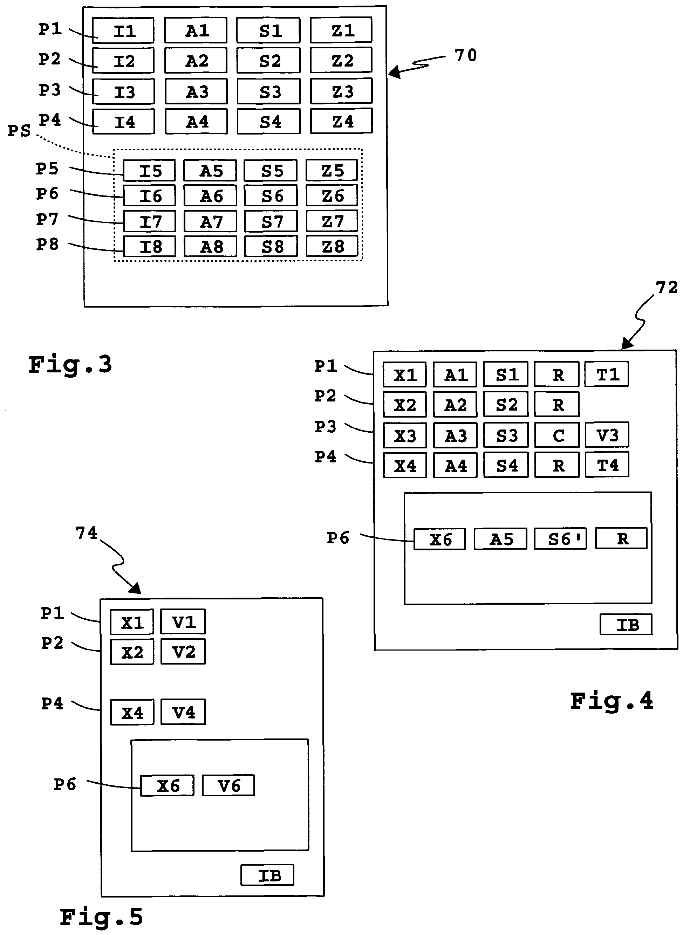

- Figur 3: eine Beschreibungsdatei,
- Figur 4: eine Konfigurationsdatei, die vom Quell-Applikationsmodul erzeugt wird, und
- Figur 5: eine vom Ziel-Applikationsmodul erzeugte Messdatei.

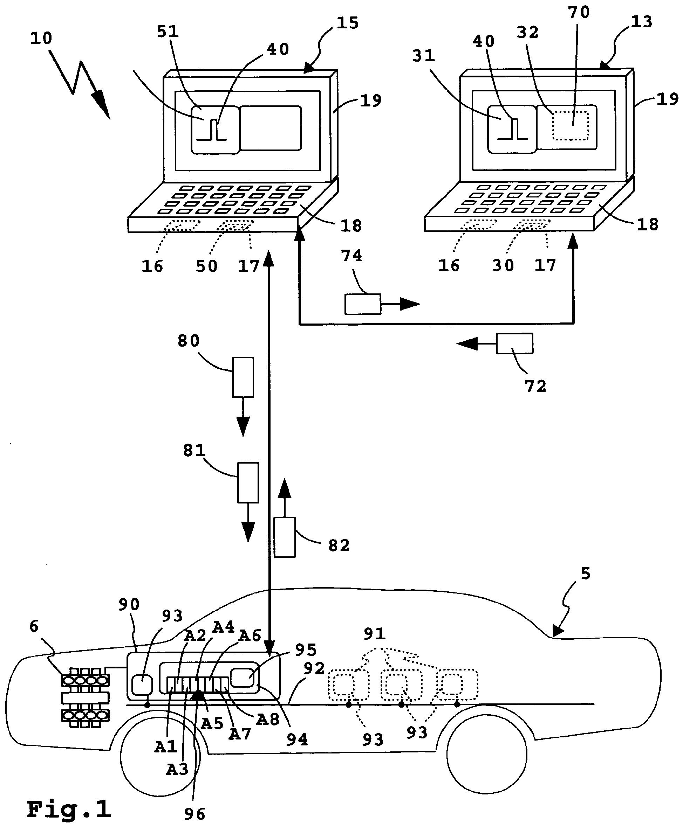

Ein System 10, das in Figur 1 insgesamt dargestellt ist, ist zur Konfiguration, also zum Testen, Prüfen, Diagnostizieren, Ändern von Parametern und dergleichen von Steuergeräten 90, 91 vorgesehen, die zur Steuerung und/oder Überwachung von Funktionen eines Kraftfahrzeugs 5 vorgesehen sind. Beispielsweise ist das Steuergerät 90 zur Steuerung und Überwachung eines Motors 6 des Kraftfahrzeugs 5 vorgesehen, während die anderen Steuergeräte 91 andere Funktionen, beispielsweise eine Schließanlage des Kraftfahrzeugs 5, Fensterheber oder dergleichen, steuern und überwachen. Die Steuergeräte 90, 91 kommunizieren über einen Fahrzeug-Bus 92 miteinander, beispielsweise einen CAN-Bus, was jedoch eine Option darstellt und nicht notwendigerweise der Fall sein muss.

Die Steuergeräte 90, 91 enthalten jeweils einen Prozessor 93, der zur Ausführung von Steuerprogrammen geeignet ist, die jeweils eine oder mehrere Funktionen überwachen und/oder steuern, beispielsweise eine Drehzahl des Motors 6. Neben den Prozessoren 93 sind noch Speicher 94 bei den Steuergeräten 90, 91 vorgesehen, in denen die vorgenannten Steuerprogramme gespeichert sind. Exemplarisch ist beim Steuergerät 90 ein Steuerprogramm 95 dargestellt, das einen Speicherbereich 96 des Speichers 94 nutzt.

Das System 10 umfasst ein Quell-Applikationsmodul 30 sowie einen Ziel-Applikationsmodul 50, die jeweils als Programmmodule ausgeführt sind, d.h. dass sie durch einen Personalcomputer ausführbares sind. Beispielsweise umfasst das System 10 Computer 13 und 15, die jeweils einen Prozessor 16 sowie einen Speicher 17 aufweisen, in welchen die Applikationsmodule 30 und 50 gespeichert sind und dementsprechend vom Prozessor 16 abrufbar und ausführbar sind. Die Computer 13 und 15 haben ein Betriebssystem, das nicht näher erläutert wird, beispielsweise Microsoft-Windows. Auf Basis dieses Betriebssystems sind die beiden Applikationsmodule 30 und 50 jeweils ausführbar. Mithilfe von Eingabemitteln 18, beispielsweise Tastatur und Maus, und Ausgabemitteln 19, beispielsweise Display, Lautsprecher und dergleichen, können die Applikationsmodule 30 und 50 jeweils eine Bedienoberfläche 31 und 51 nutzen bzw. erzeugen, deren Basis vom jeweiligen Betriebssystem der Computer 13 und 15 bereitgestellt wird. Die Bedienoberfläche 31 und/oder 51 ist z.B. eine grafische Bedienschnittstelle, wobei selbstverständlich auch andere Bedienschnittstellen, beispielsweise Spracheingabe und/oder Sprachausgabe, eine zeilenorientierte Bedienung der Applikationsmodule 30 und 50 ohne weiteres möglich sind.

Das Quell-Applikationsmodul 30 bzw. der Computer 13 befinden sich beispielsweise im Einflussbereich eines Entwicklers oder Zulieferers für einen Hersteller des Kraftfahrzeugs 5. Dieser Hersteller nutzt das Ziel-Applikationsmodul 50 bzw. den Computer 15, um in Kooperation mit dem Zulieferer bzw. Entwickler das Steuerprogramm 95 zu optimieren, Fehler zu beseitigen und dergleichen. Mithin sind also beispielsweise die Applikationsmodule 30 und 50 bzw. die jeweiligen Computer 13 und 15 weit voneinander entfernt, zum Beispiel auf unterschiedlichen Kontinenten, was die Kooperation zwischen Zulieferer bzw. Entwickler und Hersteller des Kraftfahrzeugs 5 an sich erschwert. Zudem hat der Entwickler ein Interesse daran, die näheren Details des Steuerprogramms 95, mithin also sein Know-how, möglichst geheim zu halten. Hier setzt die Erfindung ein.

Das Quell-Applikationsmodul 30 hat Zugriff zu einer Beschreibungsdatei 70, in der das Steuerprogramm 95 charakterisierende Details gespeichert sind, so zum Beispiel exemplarisch dargestellte Parameter P1 bis P8, die vom Steuerprogramm 95 genutzt werden. Die Beschreibungsdatei 70 ist z.B. im Speicher 17 des Computers 13 gespeichert.

Selbstverständlich hat ein einfaches Steuerprogramm vielleicht etwas weniger Parameter oder ein komplexes Steuerprogramm weitere Parameter, was jedoch aus Gründen der Vereinfachung hier nicht dargestellt ist.

Zu jedem der Parameter P1 bis P8 ist jeweils sein Parameternamen I1 bis I8, eine Speicheradresse A1 bis A8, die dem jeweiligen Parameter P1 bis P8 im Speicher 94 des Steuergeräts 90 zugeordnet ist, sowie die jeweilige Datengröße S1 bis S8 in der Beschreibungsdatei 70 angegeben. Eine optionale Maßnahme stellt es dar, dass in der Beschreibungsdatei 70 noch Zusatzinformationen Z1-Z8 zum jeweiligen Parameter P1 bis P8 angegeben sind, beispielsweise dessen Datentyp, dessen physikalische Größe, eine Umrechnungsregel von Rohdaten auf einen an der Bedienoberfläche anzuzeigenden Wert und dergleichen. Selbstverständlich kann die Beschreibungsdatei 70 noch weitere Informationen enthalten, was jedoch hier nicht näher erläutert wird. Während die die Parameter P1-P4 sozusagen Einzelparameter sind, bilden die Parameter P5-P8 Teile einer Parameterstruktur PS.

Das Quell-Applikationsmodul 30 stellt an der Bedienoberfläche 31 beispielsweise ein Auswahlmenü 32 in einem Fenster, das am Display bzw. den Ausgabemitteln 19 dargestellt wird, für einen Bediener bereit, an welcher dieser aus der Beschreibungsdatei 70 Parameter P1-P8 zu einem Auslesen oder Modifizieren durch das Ziel-Applikationsmodul 50 auswählen kann. Der Bediener wählt beispielsweise aus dem verfügbaren Parametersatz der Beschreibungsdatei 70 die Parameter P1-P4, sowie aus der Parameterstruktur PS den Parameter P6 aus. Dies kann mit einer üblichen Drag-and-Drop-Operation geschehen, anhand von Auswahlbefehlen über die Eingabemittel 18 und dergleichen. Das Quell-Applikationsmodul 30 hat also zur Kommunikation mit einer insbesondere grafischen Bedienoberfläche oder Erzeugung einer insbesondere grafischen Bedienoberfläche geeignete Ein-/Ausgabemittel 33. Die Beschreibungsdatei 70 ist beispielsweise im Speicher 17 des Computers 13 gespeichert, über einen USB-Stick zugänglich oder dergleichen.

Die Parameternamen I1-I8 sind beispielsweise so genannte sprechende Parameternamen, d.h. dass man an sich anhand schon allein der Parameternamen erkennen kann, welche Informationen das Steuerprogramm 95 braucht bzw. nutzt, was jedoch der Nutzer des Ziel-Applikationsmoduls 50 bzw. Hersteller des Kraftfahrzeugs 5 möglichst nicht erfahren sollte. Der Paramternamen P1 lautet z.B. Leerlaufdrehzahl.

Das Quell-Applikationsmodul 30 hat ein Erzeugungsmittel 34, um eine Konfigurationsdatei 72 zu erzeugen. In der Konfigurationsdatei 72 sind den am Auswahlmenü 32 ausgewählten Parameter P1-P4 sowie P6 zugeordnete Informationen angegeben, mit denen das Ziel-Applikationsmodul 50 später eine Kommunikation mit dem Steuergerät 90 durchführt. Das Erzeugungsmittel 34 trägt anstelle des Parameternamens I1-I4, I6 einen Anonym-Bezeichner X1-X4, X6 in die Konfigurationsdatei 72 ein sowie zudem die den Parameter P1-P4 zugeordneten Speicheradressen A1-A4 und deren jeweilige Datengröße S1-S4. Bei dieser Datengröße kann es sich beispielsweise auch um eine Datentyp-Angabe handeln, weil beispielsweise der Datentyp einen Rückschluss auf den jeweiligen Speicherbedarf eines Parameters im Speicher 94 zulässt.

Zudem gibt das Erzeugungsmittel 34 zu jedem der Parameter P1 bis P4 eine Steuerinformation R oder C an.

Die Steuerinformation R weist dazu an, dass der Parameter P1, P2 und P4 nur aus dem Speicher 94 ausgelesen werden sollen, nicht jedoch verändert.

Der Parameter P1 und der Parameter P4 sollen anhand von Triggerbedingungen T1 und T4 aus dem Speicher 94 ausgelesen werden und/oder an das Quell-Applikationsmodul 30 zurückgemeldet werden. Beispielsweise signalisiert die Triggerbedingung T1, dass der Parameter P1 bei Überschreiten eines Grenzwertes aus dem Speicher 94 gemeldet werden soll. Die Triggerbedingung T4 umfasst beispielsweise einen Gradienten oder einen Kurvenverlauf, bei dem eine Messung stattfinden soll.

Die Steuerinformation C signalisiert, dass der Parameter P3 geändert werden soll und zwar auf einen Wert V3.

Es kann vorgesehen sein, dass keine Steuerinformation C oder R angegeben ist oder sich diese implizit aus dem Kontext ergibt. Wenn sich beispielsweise schon aus dem Kontext der Konfigurationsdatei 72 ergibt, dass ein jeweiliger Parameter nur zu lesen ist, jedoch nicht zu schreiben, braucht man die entsprechende Steuerinformation nicht. Wenn also beispielsweise kein Wert angegeben ist, der in den Speicher 94 einzuschreiben ist, ergibt sich allein schon daraus, dass ein Lesevorgang und kein Schreibvorgang durch die Konfigurationsdatei 72 vorgegeben ist.

Die Parameterstruktur PS wird nicht vollständig in der Konfigurationsdatei 72 abgebildet, d.h. nur der Parameter P6 wird in der Konfigurationsdatei 72 angegeben, wobei der Parameternamen I6 zu einem Anonym-Bezeichner X6 vom Erzeugungsmittel 34 umgewandelt wird. Anstelle der Speicheradresse A6, die an sich dem Parameter P6 im Speicher 94 zugeordnet ist, ist jedoch in der Konfigurationsdatei 72 die Speicheradresse A5 des Parameters P5 angegeben. Zudem ist in der Konfigurationsdatei 72 nicht die Datengröße S6 des Parameters P6 angegeben, sondern eine demgegenüber größere Datengröße S6'. Die Datengröße S6' umfasst beispielsweise die Datengröße S6 sowie zusätzlich die Datengröße S5 des Parameters P5, an dessen eigentlicher Adresse im Speicher 94 der Lesevorgang beginnen soll. Selbstverständlich kann die Datengröße S6' noch größer gewählt werden, so dass auch beispielsweise dem Parameter P6 nachfolgende Daten aus dem Speicher 94 auszulesen sind. Die dem Parameter P6 zugeordnete Instruktion in der Konfigurationsdatei 72 verschleiert sozusagen, dass eigentlich nur eine Information über den Parameter P6 gewünscht ist, nämlich eine Leseoperation (Steuerinformation R).

Der Anonym-Bezeichner X1-X4, X6 ist beispielsweise aus der Bezeichnung der jeweiligen Speicheradresse A4-A4, A6 sowie der Datengröße S1-S4, S6' gebildet, so das eine eineindeutige Zuordnung zwischen einerseits dem Parameternamen I1-I4, I6 und andererseits dem Anonym-Bezeichner X1-X4, X6 ergibt.

Zudem ist es vorteilhaft, wenn in der Konfigurationsdatei 72 ein Identifizierer IB, zum Beispiel der Name der Beschreibungsdatei 70 oder ein sonstiger eindeutiger Kennzeichner, angegeben ist, was die spätere Weiterverarbeitung der nachfolgend beschriebenen Messdatei 74 erleichtert.

Das Quell-Applikationsmodul 30 weist Übertragungsmittel 35 zum Übertragen der Konfigurationsdatei 72 an das Ziel-Applikationsmodul 50 auf. Die Übertragungsmittel 35 umfassen beispielsweise ein Sendemodul 36 oder ein Schreibmodul 37, um die Konfigurationsdatei 72 über ein Netzwerk, beispielsweise das Internet, zu versenden oder auf einen Datenträger, zum Beispiel eine USB-Stick, zu schreiben. Die Übertragung der Konfigurationsdatei 72 ist in Figur 1 durch einen Pfeil dargestellt.

Die Ziel-Applikationsmodul 50 empfängt die Konfigurationsdatei 72 anhand von Übertragungsmitteln 55, die beispielsweise ein Empfangsmodul 58 und/oder ein Lesemodul 59 zum Empfangen von Daten über ein Netzwerk, zum Beispiel das Internet, oder zum Einlesen der Konfigurationsdatei 72 von einem Datenträger, zum Beispiel einer CD-ROM oder dem vorgenannten USB-Stick, aufweisen.

Das Ziel-Applikationsmodul 50 kann beispielsweise die in der Konfigurationsdatei 72 enthaltenen Daten an einer Bedienoberfläche 51 anzeigen und weist zu diesem Zweck vorzugsweise Ein-/Ausgabemittel 53 auf.

Das Ziel-Applikationsmodul 50 kommuniziert mit dem Steuergerät 90 über ein Kalibrierungsprotokoll, beispielsweise CCP. Das Steuergerät 90 hat beispielsweise hierfür eine separate, zum Beispiel als eine Bus-Schnittstelle oder dergleichen ausgestaltete Kommunikationsschnittstelle 97, für die das Ziel-Applikationsmodul 50 geeignete Kommunikationsmittel 60 aufweist, zum Beispiel einen Buskoppler, eine USB-Schnittstelle oder eine Kommunikationsschnittstelle zur Nutzung einer USB-Schnittstelle des Computers 15 oder dergleichen.

Es ist auch möglich, dass die Kommunikationsmittel 60 einen Buskoppler für den Bus 92 des Kraftfahrzeugs 5 umfassen, so dass das Ziel-Applikationsmodul 50 bzw. der Computer 15 direkt an den Bus 92 ankoppelbar ist und somit über den Bus 92 mit dem Steuergerät 90 kommunizieren kann. Der Buskoppler ist beispielsweise zur Kommunikation auf einem CAN-Bus ausgestaltet.

Beispielhaft für die Kommunikation zwischen dem Ziel-Applikationsmodul 50 und dem Steuergerät 90 ist beispielsweise ein Steuerbefehl 80 angegeben, mit dem das Ziel-Applikationsmodul 50 das Steuergerät 90 zum Einschreiben des Werts V in die Speicheradresse A3 des Parameters P3 anweist.

Ein anderer Steuerbefehl 81 weist das Steuergerät 90 zum Auslesen des Parameters P4 an. Das Ziel-Applikationsmodul 50 weiß jedoch sozusagen nicht, dass es sich hierbei um den Parameter P4 handelt, da es nur den Anonym-Bezeichner X4 kennt und nicht weiß, was sich hinter diesem verbirgt. Das Steuergerät 90 liest dementsprechend die Adresse A4 im Umfang der Datengröße S4 aus, beispielsweise bei Eintreten der Triggerbedingung T4. Die vorgenannten Informationen oder Instruktionen können in dem Steuerbefehl 81 oder nicht dargestellten Folgebefehlen dazu enthalten sein.

Das Steuergerät 90 antwortet auf den Steuerbefehl 81 mit einer Meldung 82, in deren Meldedaten 83 beispielsweise der aktuell an der Speicheradresse A4 stehende Wert V4 angegeben ist.

Sinngemäß fragt das Ziel-Applikationsmodul 50 auch die weiteren in der Konfigurationsdatei 72 verlangten Parameterwerte bzw. im Speicher 94 stehenden Werte ab und erzeugt eine Messdatei 74, z.B. mit Erzeugungsmitteln 54. In der Messdatei 74 ist beispielsweise jeweils der Anonym-Bezeichner X1-X4, X6 sowie der zugehörige Wert V1-V4, V6 im Speicher 95 angegeben. Der Wert V6 umfasst beispielsweise die an den Speicheradressen A5 und A6 stehenden Daten.

Das Ziel-Applikationsmodul 50 versendet die Messdatei 74 beispielsweise mittels eines Sendemoduls 56 seiner Übertragungsmittel 55 oder schreibt sie mit einem Schreibmodul 57 sein Übertragungsmittel 55 auf ein Speichermedium, zum Beispiel eine USB-Stick. Das Quell-Applikationsmodul 30 empfängt die Messdatei 74 anhand von beispielsweise einem Empfangsmodul 38 oder liest Sie mittels eines Lesemoduls 39 seiner Übertragungsmittel 35 ein. Das Sendemodul 56 und das Empfangsmodul 38 kommunizieren beispielsweise über eine Telefonleitung, das Internet oder dergleichen.

Damit die in der Messdatei 74 enthaltenen Daten für den Bediener des Quell-Applikationsmoduls 30 verständlicher werden, ordnet das Quell-Applikationsmodul 30 Daten aus der Beschreibungsdatei 70 den Daten aus der Messdatei 74 zu.

So zeigt das Quell-Applikationsmodul 30 beispielsweise die Werte V1- V4, V6 im Zusammenhang mit den zugehörigen Parameternamen P1-P4, P6 an der Bedienoberfläche 31 an. Weitere Maßnahmen sind zweckmäßig, so zum Beispiel dass die Zusatzinformationen Z1-Z4, Z6 zur Anzeige der Parameter P1-P4, P6 verwendet werden. Der Wert V1 umfasst beispielsweise Rohdaten eines Drehzahlwertes. Diesen Drehzahlwert rechnet das Quell-Applikationsmodul 30 beispielsweise in einem physikalischen Wert um, wobei es vorteilhaft ist, dass beispielsweise ein Offset abgezogen oder dazu gezählt wird, ein Umrechnungsfaktor angewendet wird oder dergleichen. Diese Informationen sind als Zusatzinformationen Z1-Z8 in der Beschreibungsdatei 70 gespeichert.

Die Zuordnung der Konfigurationsdatei 72 zu Messdatei 74 wird dadurch erleichtert, dass das Ziel-Applikationsmodul 50 in die Messdatei 74 den Identifizierer IB schreibt.

Eine vorteilhafte Maßnahme stellt es dar, wenn das Quell-Applikationsmodul 30 oder das Ziel-Applikationsmodul 50 zur grafischen Ausgabe von Daten ausgestaltet sind, beispielsweise zur Ausgabe einer einem Parameter zugeordneten Messkurve 40. Diese kann an der Bedienoberfläche 31 und/oder Bedienoberfläche 51 zweckmäßigerweise angezeigt werden, so dass auch der vor Ort, beim Kraftfahrzeug 5, messende Bediener eine Rückkopplung über den Verlauf des zu messenden Parameters hat, auch wenn er nicht weiß, um welchen Parameter es sich handelt, z.B. den Parameter P6.

Die Erfindung betrifft also kurz zusammengefasst ein Verfahren zur Datenkommunikation eines Quell-Applikationsmoduls mit einem Steuergerät eines Kraftfahrzeugs, ein Quell-Applikationsmodul und ein Ziel-Applikationsmodul gemäß der unabhängigen Ansprüche, sowie vorteilhafte Ausgestaltungen gemäß der abhängigen Ansprüche.

## Patentansprüche

1. Verfahren zur Datenkommunikation eines Quell-Applikationsmoduls (30) mit einem Steuergerät (90) eines Kraftfahrzeugs (5), wobei das Steuergerät (90) ein Steuerprogramm (95) zur Steuerung und/oder Überwachung mindestens einer Funktion des Kraftfahrzeugs (5) ausführt, wobei zum Auslesen und/oder zur Veränderung von Daten des Steuerprogramms (95) eine Beschreibungsdatei (70) vorgesehen ist, in der Parameternamen (I1-I8) von Parametern (P1-P8) des Steuerprogramms (95) und den jeweiligen Parametern (P1-P8) zugeordnete Speicheradressen (A1-A8) enthalten sind, in die das Steuerprogramm (95) den jeweiligen Parameter (P1-P8) in einem Steuergerät-Speicher (94) des Steuergeräts (90) ablegt, mit den Schritten:
- Erzeugen einer Konfigurationsdatei (72) für ein von dem Quell-Applikationsmodul (30) räumlich entferntes Ziel-Applikationsmodul (50) zu einer Datenkommunikation mit dem Steuergerät (90) anhand der Beschreibungsdatei (70) durch das Quell-Applikationsmodul (30), wobei in der Konfigurationsdatei (72) zu mindestens einem Parameter (P1-P8) der Beschreibungsdatei (70) ein zu dessen Parameternamen (I1-I8) alternativer, den Parameternamen (I1-I8) anonymisierender Anonym-Bezeichner (X1-X4, X6), die Speicheradresse (A1-A8) und Datengröße (S1-S8) des mindestens einen Parameters (P1-P8) im Steuergerät-Speicher (94) und eine Steuerinformation (C, R), ob der mindestens eine Parameter (P1-P8) in dem Steuergerät-Speicher (94) modifiziert und/oder ausgelesen werden soll, angegeben ist,
- Übertragen der Konfigurationsdatei (72) von dem Quell-Applikationsmodul (30) an das Ziel-Applikationsmodul (50) über eine Kommunikationsleitung oder einen Datenträger,
- Kommunikation des Ziel-Applikationsmoduls (50) mit dem Steuergerät (90) mittels eines Kalibrierungsprotokolls, wobei das Ziel-Applikationsmodul (50) in Abhängigkeit von der dem mindestens einen Parameter (P1-P8) zugeordneten Steuerinformation (C, R) mindestens einen Steuerbefehl (80, 81) zum Modifizieren des mindestens einen Parameters (P1-P8) im Steuergerät-Speicher (94) oder zum Auslesen des mindestens einen Parameters (P1-P8) aus dem Steuergerät-Speicher (94) anhand der Konfigurationsdatei (72) an das Steuergerät (90) sendet,
- Empfangen einer Meldung (82) des Kalibrierungsprotokolls, in der dem mindestens einen zu lesenden Parameter (P1-P8) zugeordnete Meldedaten (83) aus dem Steuergerät-Speicher (94) enthalten sind, durch das Ziel-Applikationsmodul (50) von dem Steuergerät (90) und Übertragen einer Messdatei (74) von dem Ziel-Applikationsmodul (50) an das Quell-Applikationsmodul (30), wobei in der Messdatei (74) die dem mindestens einen Parameter (P1-P8) zugeordneten Meldedaten (83) enthalten sind,
- Anzeige der Meldedaten (83) an einer Bedienoberfläche (31) des Quell-Applikationsmoduls (30),
- und Zuordnung des Parameternamens (I1-I8) zu den dem mindestens einen Parameter (P1-P8) zugeordneten Meldedaten (83) anhand der Beschreibungsdatei (70) durch das Quell-Applikationsmodul (30), wobei das Quell-Applikationsmodul (30) in der Konfigurationsdatei (72) einen gegenüber der Datengröße (S1-S8) des mindestens einen Parameters (P1-P8) größeren aus dem Steuergerät-Speicher (94) auszulesenden Datenbereich angibt, der sich an den durch die Speicheradresse (A1-A8) des mindestens einen Parameters (P1-P8) adressierbaren und durch dessen Datengröße (S1-S8) definierten Bereich des Steuergerät-Speichers (94) oben und/oder unten unmittelbar anschließt.

2. Verfahren nach Anspruch 1, **dadurch gekennzeichnet, dass** in der Messdatei (74) ein die Beschreibungsdatei (70) kennzeichnender Identifizierer (IB) enthalten ist.

3. Verfahren nach Anspruch 2, **gekennzeichnet durch** Anzeige der Meldedaten (83) an einer Bedienoberfläche (51) des Ziel-Applikationsmoduls (50).

4. Verfahren nach Anspruch 2 oder 3, **gekennzeichnet durch** Zuordnung mindestens einer weiteren dem mindestens einen Parameter (P1-P8) zugeordneten Information zu den dem mindestens einen Parameter (P1-P8) zugeordneten Meldedaten (83) anhand der Beschreibungsdatei (70) und/oder Einordnen der Meldedaten (83) des mindestens einen Parameters (P1-P8) in eine durch die Beschreibungsdatei (70) definierte überlagerte Anzeigestruktur oder Datenstruktur und/oder Umwandeln der Meldedaten (83) anhand einer Instruktion der Beschreibungsdatei (70) durch das Quell-Applikationsmodul (30).

5. Verfahren nach einem der vorhergehenden Ansprüche, **dadurch gekennzeichnet, dass** das Quell-Applikationsmodul (30) anstelle der Speicheradresse (A1-A8) des mindestens einen Parameters (P1-P8) eine Speicheradresse (A1-A8) in dem erweiterten Datenbereich in der Konfigurationsdatei (72) angibt.

6. Verfahren nach einem der vorhergehenden Ansprüche, **dadurch gekennzeichnet, dass** Bereitstellen eines Auswahlmenüs (32) zur Auswahl des mindestens einen Parameters (P1-P8) durch einen Bediener an einer grafischen Bedienoberfläche (31, 51) des Quell-Applikationsmoduls (30) oder durch das Quell-Applikationsmodul (30).

7. Verfahren nach einem der vorhergehenden Ansprüche, **dadurch gekennzeichnet, dass** der mindestens eine Parameter (P1-P8) einen Bestandteil einer Parameterstruktur (PS) oder Speicherstruktur bildet und an der grafischen Bedienoberfläche (31, 51) eine Auswahl des mindestens einen Parameters (P1-P8), zweckmäßigerweise mindestens eines zweiten Parameters (P1-P8), aus der Parameterstruktur (PS) oder Speicherstruktur angeboten wird, derart, dass in der Konfigurationsdatei (72) nur ein Teil der Parameterstruktur (PS) oder Speicherstruktur zum Modifizieren und/oder Auslesen aus dem Steuergerät-Speicher (94) angegeben ist.

8. Verfahren nach einem der vorhergehenden Ansprüche, **dadurch gekennzeichnet, dass** das Quell-Applikationsmodul (30) mindestens eine Triggerbedingung (T1, T4), insbesondere einen Grenzwert oder einen Verlauf, für den zu messenden mindestens einen Parameter (P1-P8) in der Konfigurationsdatei (72) angibt.

9. Verfahren nach einem der vorhergehenden Ansprüche, **dadurch gekennzeichnet, dass** das Quell-Applikationsmodul (30) den Anonym-Bezeichner (X1-X4, X6) durch Ausführung mindestens einer Konvertierungsregel und/oder anhand einer Zuordnungstabelle erzeugt und/oder dass der Anonym-Bezeichner (X1-X4, X6) die Speicheradresse (A1-A8) und/oder die Datengröße (S1-S8) des mindestens einen Parameters (P1-P8) umfasst oder dadurch gebildet ist.

10. Verfahren nach einem der vorhergehenden Ansprüche, **dadurch gekennzeichnet, dass** die Beschreibungsdatei (70) eine ASAP2-Datei ist und/oder das Kalibrierungsprotokoll ein CCP-Protokoll (CAN Calibration protocol) oder ein auf CAN (Controller Area Network) oder Ethernet oder Flexray oder dergleichen basierendes oder übertragbares XCP-Protokoll (X Calibration protocol) ist und/oder dass in der Konfigurationsdatei (72) ein die Beschreibungsdatei (70) kennzeichnender Identifizierer (IB) enthalten ist.

11. Quell-Applikationsmodul (30) zur Datenkommunikation mit einem Steuergerät (90) eines Kraftfahrzeugs (5) gemäß dem Verfahren nach einem der vorhergehenden Ansprüche, wobei das Steuergerät (90) ein Steuerprogramm (95) zur Steuerung und/oder Überwachung mindestens einer Funktion insbesondere des Kraftfahrzeugs (5) ausführt, wobei zum Auslesen und/oder zur Veränderung von Daten des Steuerprogramms (95) eine Beschreibungsdatei (70) vorgesehen ist, in der Parameternamen (I1-I8) von Parametern (P1-P8) des Steuerprogramms (95) und den jeweiligen Parametern (P1-P8) zugeordnete Speicheradressen (A1-A8) enthalten sind, in die das Steuerprogramm (95) den jeweiligen Parameter (P1-P8) in einem Steuergerät-Speicher (94) des Steuergeräts (90) ablegt, wobei das Quell-Applikationsmodul (30)
- Erzeugungsmittel (34) zum Erzeugen einer Konfigurationsdatei (72) für ein räumlich entferntes Ziel -Applikationsmodul (50) zu einer Datenkommunikation mit dem Steuergerät (90) anhand der Beschreibungsdatei (70) durch das Quell-Applikationsmodul (30), wobei in der Konfigurationsdatei (72) zu mindestens einem Parameter (P1-P8) der Beschreibungsdatei (70) ein zu dessen Parameternamen (I1-I8) alternativer, den Parameternamen (I1-I8) anonymisierender Anonym-Bezeichner (X1-X4, X6), die Speicheradresse (A1-A8) und Datengröße (S1-S8) des mindestens einen Parameters (P1-P8) im Steuergerät-Speicher und eine Steuerinformation (C, R), ob der mindestens eine Parameter (P1-P8) in dem Steuergerät-Speicher (94) modifiziert und/oder ausgelesen werden soll, angegeben ist, und
- Übertragungsmittel (35) zum Übertragen der Konfigurationsdatei (72) von dem Quell-Applikationsmodul (30) an das Ziel-Applikationsmodul (50) über eine Kommunikationsleitung oder einen Datenträger aufweist, derart, dass das Ziel-Applikationsmodul (50) eine Kommunikation des Ziel-Applikationsmoduls (50) mit dem Steuergerät (90) mittels eines Kalibrierungsprotokolls durchführen kann, wobei das Ziel-Applikationsmodul (50) in Abhängigkeit von der dem mindestens einen Parameter (P1-P8) zugeordneten Steuerinformation (C, R) mindestens einen Steuerbefehl (80, 81) zum Modifizieren des mindestens einen Parameters (P1-P8) im Steuergerät-Speicher (94) oder zum Auslesen des mindestens einen Parameters (P1-P8) aus dem Steuergerät-Speicher (94) anhand der Konfigurationsdatei (72) an das Steuergerät (90) sendet,
wobei die Übertragungsmittel (35) zum Empfangen oder Einlesen einer Messdatei (74) ausgestaltet sind, in der dem mindestens einen Parameter (P1-P8) zugeordnete Meldedaten (83) enthalten sind, die das Ziel-Applikationsmodul (50) anhand einer von dem Steuergerät (90) empfangenen Meldung (82) des Kalibrierungsprotokolls, in der dem mindestens einen zu lesenden Parameter (P1-P8) zugeordnete Meldedaten (83) aus dem Steuergerät-Speicher (94) enthalten sind, bereitstellt,
- wobei das Quell-Applikationsmodul (30) eine Bedienoberfläche (51) zur Anzeige der Meldedaten (83) und zur Zuordnung des Parameternamens (I1-I8) zu den dem mindestens einen Parameter (P1-P8) zugeordneten Meldedaten (83) anhand der Beschreibungsdatei (70) aufweist,
- und wobei das Quell-Applikationsmodul (30) in der Konfigurationsdatei (72) einen gegenüber der Datengröße (S1-S8) des mindestens einen Parameters (P1-P8) größeren aus dem Steuergerät-Speicher (94) auszulesenden Datenbereich angibt, der sich an den durch die Speicheradresse (A1-A8) des mindestens einen Parameters (P1-P8) adressierbaren und durch dessen Datengröße (S1-S8) definierten Bereich des Steuergerät-Speichers (94) oben und/oder unten unmittelbar anschließt.

12. Ziel-Applikationsmodul (50) zur Datenkommunikation mit einem Quell-Applikationsmodul (30) gemäß Anspruch 11 und mit einem Steuergerät (90) eines Kraftfahrzeugs (5) gemäß dem Verfahren nach einem der Ansprüche 1 bis 12, wobei das Steuergerät (90) ein Steuerprogramm (95) zur Steuerung und/oder Überwachung mindestens einer Funktion des Kraftfahrzeugs (5) ausführt, wobei zum Auslesen und/oder zur Veränderung von Daten des Steuerprogramms (95) eine Beschreibungsdatei (70) vorgesehen ist, in der Parameternamen (I1-I8) von Parametern (P1-P8) des Steuerprogramms (95) und den jeweiligen Parametern (P1-P8) zugeordnete Speicheradressen (A1-A8) enthalten sind, in die das Steuerprogramm (95) den jeweiligen Parameter (P1-P8) in einem Steuergerät-Speicher (94) des Steuergeräts (90) ablegt, wobei das Ziel-Applikationsmodul (50)
- Übertragungsmittel (55) zum Empfangen einer Konfigurationsdatei (72) über eine Kommunikationsleitung oder einen Datenträger von dem räumlich entfernten Quell-Applikationsmodul (30) aufweist, wobei die Konfigurationsdatei (72) zu einer Datenkommunikation des Ziel-Applikationsmoduls (50) mit dem Steuergerät (90) vorgesehen ist und wobei in der Konfigurationsdatei (72) zu mindestens einem Parameter (P1-P8) der Beschreibungsdatei (70) ein zu dessen Parameternamen (I1-I8) alternativer, den Parameternamen (I1-I8) anonymisierender Anonym-Bezeichner (X1-X4, X6), die Speicheradresse (A1-A8) und Datengröße (S1-S8) des mindestens einen Parameters (P1-P8) im Steuergerät-Speicher (94) und eine Steuerinformation (C, R), ob der mindestens eine Parameter (P1-P8) in dem Steuergerät-Speicher (94) modifiziert und/oder ausgelesen werden soll, angegeben ist,
- Kommunikationsmittel (60) zu einer Kommunikation des Ziel-Applikationsmoduls (50) mit dem Steuergerät (90) mittels eines Kalibrierungsprotokolls aufweist, wobei das Ziel-Applikationsmodul (50) in Abhängigkeit von der dem mindestens einen Parameter (P1-P8) zugeordneten Steuerinformation (C, R) mindestens einen Steuerbefehl (80, 81) zum Modifizieren des mindestens einen Parameters (P1-P8) im Steuergerät-Speicher (94) oder zum Auslesen des mindestens einen Parameters (P1-P8) aus dem Steuergerät-Speicher (94) anhand der Konfigurationsdatei (72) an das Steuergerät (90) sendet, wobei die Übertragungsmittel (55) zum Übertragen einer Messdatei (74) von dem Ziel-Applikationsmodul (50) an das Quell-Applikationsmodul (30) ausgestaltet sind, wobei in der Messdatei (74) die dem mindestens einen Parameter (P1-P8) zugeordneten Meldedaten (83) enthalten sind,
- wobei in der Konfigurationsdatei (72) einen gegenüber der Datengröße (S1-S8) des mindestens einen Parameters (P1-P8) größeren aus dem Steuergerät-Speicher (94) auszulesenden Datenbereich durch das Quell-Applikationsmodul (30) angegeben ist, der sich an den durch die Speicheradresse (A1-A8) des mindestens einen Parameters (P1-P8) adressierbaren und durch dessen Datengröße (S1-S8) definierten Bereich des Steuergerät-Speichers (94) oben und/oder unten unmittelbar anschließt.

13. Quell-Applikationsmodul (30) nach Anspruch 11 oder Ziel-Applikationsmodul (50) nach Anspruch 12, **dadurch gekennzeichnet, dass** das jeweilige Applikationsmodul durch einen Prozessor (16) ausführbaren Programmcode umfasst oder durch solchen Programmcode gebildet ist.

## Claims

1. Method for data communication between a source application module (30) and a control unit (90) of a motor vehicle (5), wherein the control unit (90) executes a control programme (95) for controlling and/or monitoring at least one function of the motor vehicle (5), wherein, for reading out and/or altering data of the control programme (95), there is provided a description file (70), in which parameter names (I1 - I8) of parameters (P1 - P8) of the control unit (90) and memory addresses (A1 - A8) assigned to the respective parameters (P1 - P8) are contained, where the control programme (95) stores the respective parameter (PI - P8) in a control unit memory (94) of the control unit (90), the method comprising the steps of:
- the generation of a configuration file (72) for a target application module (50) spatially distant from the source application module (30) for a data communication with the control unit (90), involving the use of the description file (70) by the source application module (30), wherein in the configuration file (72) there are specified for at least one parameter (PI - P8) of the description file (70) an anonymous identifier (X1 - X4, X6) alternative to its parameter name (I1 - I8) and anonymising the parameter name (I1 - I8), the memory address (A1 - A8) and the data size (S1 - S8) of the at least one parameter (P1 - P8) and a control information (C, R) whether the at least one parameter (PI - P8) is to be modified in and/or read out of the control unit memory (94),
- the transmission of the configuration file (72) from the source application module (30) to the target application module (50) via a communication line or data carrier,
- the communication of the target application module (50) with the control unit (90) by means of a calibration protocol, wherein the target application module (50), as a function of the control information (C, R) assigned to the at least one parameter (P1 - P8), transmits at least one control command (80, 81) to the control unit (90) for modifying the at least one parameter (P1 - P8) in the control unit memory (94) or for reading out the at least one parameter (P1 - P8) from the control unit memory (94) with the aid of the configuration file (72),
- the reception of a message (82) of the calibration protocol, in which message are contained message data (83) assigned to the at least one parameter (P1 - P8) to be read from the control unit memory (94), by the target application module (50) from the control unit (90) and the transmission of a measurement file (74) from the target application module (50) to the source application module (30), wherein the measurement file (74) contains measurement data (83) assigned to the at least one parameter (P1 - P8),
- the display of the measurement data (83) on a user interface (31) of the source application module (30), and
- the assignment of the parameter name (I1 - I8) to the measurement data (83) assigned to the at least one parameter (P1 - P8) by the source application module (30) with the aid of the description file (70), wherein the source application module (30) specifies in the configuration file (72) a data area to be read out from the control unit memory (94), which data area is larger than the data size (S1 - S8) of the at least one parameter (P1 - P8) and adjoins directly at the top and/or at the bottom that area of the control unit memory (94) which is addressable by the memory address (A1 - A8) of the at least one parameter (P1 - P8) and defined by its data size (S1 - S8).

2. Method according to claim 1, **characterised in that** the measurement file (74) contains an identifier (IB) designating the description file (70).

3. Method according to claim 2, **characterised by** the display of the measurement data (83) on a user interface (51) of the target application module (50).

4. Method according to claim 2 o 3, **characterised by** the assignment of at least one further information assigned to the at least one parameter (P1 - P8) to the message data (83) assigned to the at least one parameter (P1 - P8) with the aid of the description file (70) and/or the placing of the message data (83) of the at least one parameter (P1 - P8) in a superimposed display structure and/or data structure defined by the description file (70) and/or the conversion of the message data (83) with the aid of an instruction of the description file (70) by the source application module (30).

5. Method according to any of the preceding claims, **characterised in that** the source application module (30) specifies a memory address (A1 - A8) in the extended data area in the configuration file (72) instead of the memory address (A1 - A8) of the at least one parameter (P1 - P8).

6. Method according to any of the preceding claims, **characterised by** the provision of a selection menu for the selection of the at least one parameter (P1 - P8) by an operator at a graphical user interface (31, 51) of the source application module (30) or by the source application module (30).

7. Method according to any of the preceding claims, **characterised in that** the at least one parameter (P1 - P8) forms a part of a parameter structure (PS) or memory structure and a selection of the at least one parameter (P1 - P8), expediently of at least one second parameter (P1 - P8), from the parameter structure (PS) or memory structure is offered at the graphical user interface (31, 51) in such a way that only a part of the parameter structure (PS) or memory structure is specified in the configuration file (72) for modification and/or read-out from the control unit memory (94).

8. Method according to any of the preceding claims, **characterised in that** the source application module (30) specifies at least one trigger condition (T1, T4), in particular a limit value or a behaviour, for the at least one parameter (P1 - P8) to be measured in the configuration file (72).

9. Method according to any of the preceding claims, **characterised in that** the source application module (30) generates the anonymous identifier (X1 - X4, X6) by executing at least one conversion rule and/or with the aid of an assignment table, and/or **in that** the anonymous identifier (X1 - X4, X6) comprises or is represented by the memory address (A1 - A8) and/or the data size (S1 - S8) of the at least one parameter (P1 - P8).

10. Method according to any of the preceding claims, **characterised in that** the description file (70) is an ASAP2 file and/or the calibration protocol is a CCP protocol (CAN calibration protocol) or a CAN- (controller area network) or Ethernet- or Flexray- or the like based or transmittable XCP protocol (X calibration protocol), and/or **in that** the configuration file (72) contains an identifier (IB) designating the description file (70).

11. Source application module (30) for data communication with a control unit (90) of a motor vehicle (5) in accordance with the method according to any of the preceding claims, wherein the control unit (90) executes a control programme (95) for controlling and/or monitoring at least one function, in particular of the motor vehicle (5), wherein there is provided a description file (70), in which parameter names (I1 - 18) of parameters (P1 - P8) of the control unit (90) and memory addresses (A1 - A8) assigned to the respective parameters (P1 - P8) are contained, where the control programme (95) stores the respective parameter (P1 - P8) in a control unit memory (94) of the control unit (90), wherein the source application module (30) comprises:
- generating means (34) for generating a configuration file (72) for a target application module (50) spatially distant from the source application module (30) for a data communication with the control unit (90), involving the use of the description file (70) by the source application module (30), wherein in the configuration file (72) there are specified for at least one parameter (P1 - P8) of the description file (70) an anonymous identifier (X1 - X4, X6) alternative to its parameter name (I1 - I8) and anonymising the parameter name (I1 - I8), the memory address (A1 - A8) and the data size (S1 - S8) of the at least one parameter (P1 - P8) and a control information (C, R) whether the at least one parameter (P1 - P8) is to be modified in and/or read out of the control unit memory (94), and
- transmission means (35) for the transmission of the configuration file (72) from the source application module (30) to the target application module (50) via a communication line or data carrier in such a way that the target application module (50) can execute a communication of the target application module (50) with the control unit (90) by means of a calibration protocol, wherein the target application module (50), as a function of the control information (C, R) assigned to the at least one parameter (P1 - P8), transmits at least one control command (80, 81) to the control unit (90) for modifying the at least one parameter (P1 - P8) in the control unit memory (94) or for reading out the at least one parameter (P1 - P8) from the control unit memory (94) with the aid of the configuration file (72), wherein the transmission means (35) are designed for receiving or reading-in a measurement file (74), in which there are contained message data (83) assigned to the at least one parameter (P1 - P8) and provided by the target application module (50) with the aid of a message (82) of the calibration protocol received by the control unit (90), which message (82) contains message data (83) from the control unit memory (94) which are assigned to the at least one parameter (P1 - P8) to be read,
- wherein the source application module (30) comprises a user interface (51) for the display of the message data (83) and for the assignment of the parameter name (I1 - I8) to the message data (83) assigned to the at least one parameter (P1 - P8) with the aid of the description file (70),
- and wherein the source application module (30) specifies in the configuration file (72) a data area to be read out from the control unit memory (94), which data area is larger than the data size (S1 - S8) of the at least one parameter (P1 - P8) and adjoins directly at the top and/or at the bottom that area of the control unit memory (94) which is addressable by the memory address (A1 - A8) of the at least one parameter (P1 - P8) and defined by its data size (S1 - S8).

12. Target application module (50) for data communication with a source application module (30) according to claim 11 and with a control unit (90) of a motor vehicle (5) in accordance with the method according to any of claims 1 to 12, wherein the control unit (90) executes a control programme (95) for controlling and/or monitoring at least one function of the motor vehicle (5), wherein, for reading out and/or altering data of the control programme (95), there is provided a description file (70), in which parameter names (I1 - I8) of parameters (P1 - P8) of the control programme (95) and memory addresses (A1 - A8) assigned to the respective parameters (P1 - P8) are contained, where the control programme (95) stores the respective parameter (P1 - P8) in a control unit memory (94) of the control unit (90), wherein the target application module (50) comprises:
- transmission means (55) for receiving a configuration file via a communication line or data carrier from the spatially distant source application module (30), wherein the configuration file (72) is provided for a data communication between the target application module (50) and the control unit (90) and wherein in the configuration file (72) there are specified for at least one parameter (P1 - P8) of the description file (70) an anonymous identifier (X1 - X4, X6) alternative to its parameter name (I1 - I8) and anonymising the parameter name (I1 - I8), the memory address (A1 - A8) and the data size (S1 - S8) of the at least one parameter (P1 - P8) and a control information (C, R) whether the at least one parameter (P1 - P8) is to be modified in and/or read out of the control unit memory (94),
- communication means (60) for a communication between the target application module (50) and the control unit (90) by means of a calibration protocol, wherein the target application module (50), as a function of the control information (C, R) assigned to the at least one parameter (P1 - P8), transmits at least one control command (80, 81) to the control unit (90) for modifying the at least one parameter (P1 - P8) in the control unit memory (94) or for reading out the at least one parameter (P1 - P8) from the control unit memory (94) with the aid of the configuration file (72), wherein the transmission means (55) are designed for transmitting a measurement file (74) form the target application module (50) to the source application module (30), wherein the measurement file (74) contains the message data (83) assigned to the at least one parameter (P1 - P8),
- wherein in the configuration file (72) a data area to be read out from the control unit memory (94) is specified by the source application module (30), which data area is larger than the data size (S1 - S8) of the at least one parameter (P1 - P8) and adjoins directly at the top and/or at the bottom that area of the control unit memory (94) which is addressable by the memory address (A1 - A8) of the at least one parameter (P1 - P8) and defined by its data size (S1 - S8).

13. Source application module (30) according to claim 11 or target application module (50) according to claim 12, **characterised in that** the respective application module comprises a programme code executable by a processor (16) or is represented by such a programme code.

## Revendications

1. Procédé de communication de données d'un module d'application source (30) avec un appareil de commande (90) d'un véhicule automobile (5), dans lequel l'appareil de commande (90) exécute un programme de commande (95) pour la commande et/ou la surveillance d'au moins une fonction du véhicule automobile (5), dans lequel il est prévu pour la lecture et/ou pour la modification de données du programme de commande (95) un fichier de description (70) dans lequel sont contenus des noms de paramètre (I1-I8) de paramètres (P1-P8) du programme de commande (95) et des adresses de mémoire (A1-A8) associées aux paramètres respectifs (P1-P8), dans lequel le programme de commande (95) dépose le paramètre respectif (P1-P8) dans une mémoire d'appareil de commande (94) de l'appareil de commande (90), avec les étapes :
- la génération d'un fichier de configuration (72) pour un module d'application cible (50) distant spatialement du module d'application source (30) en vue d'une communication de données avec l'appareil de commande (90) à l'aide du fichier de description (70) par le biais du module d'application source (30), dans lequel dans le fichier de configuration (72) sont indiqués pour au moins un paramètre (P1-P8) du fichier de description (70) un désignateur anonyme (X1-X4, X6) en alternative à son nom de paramètre (I1-I8), anonymisant le nom de paramètre (I1-I8), l'adresse de mémoire (A1-A8) et la taille des données (S1-S8) de l'au moins un paramètre (P1-P8) dans la mémoire d'appareil de commande (94) et une information de commande (C, R) si l'au moins un paramètre (P1-P8) dans la mémoire d'appareil de commande (94) doit être modifié et/ou lu,
- la transmission du fichier de configuration (72) du module d'application source (30) au module d'application cible (50) par le biais d'une ligne de communication ou d'un support de données,
- la communication du module d'application cible (50) avec l'appareil de commande (90) au moyen d'un protocole d'étalonnage, dans lequel le module d'application cible (50) envoie à l'appareil de commande (90), en fonction de l'information de commande (C, R) associée à l'au moins un paramètre (P1-P8), au moins une instruction de commande (80, 81) pour la modification de l'au moins un paramètre (P1-P8) dans la mémoire d'appareil de commande (94) ou pour la lecture de l'au moins un paramètre (P1-P8) de la mémoire d'appareil de commande (94) à l'aide du fichier de configuration (72),
- la réception d'un message (82) du protocole d'étalonnage, dans lequel sont contenues des données de notification (83), de la mémoire d'appareil de commande (94), associées à l'au moins un paramètre (P1-P8) à lire, par le module d'application cible (50) en provenance de l'appareil de commande (90) et la transmission d'un fichier de mesure (74) du module d'application cible (50) au module d'application source (30), dans lequel les données de notification (83) associées à l'au moins un paramètre (P1-P8) sont contenues dans le fichier de mesure (74),
- l'affichage des données de notification (83) sur une interface utilisateur (31) du module d'application source (30),
- et l'association du nom de paramètre (I1-I8) aux données de notification (83) associées à l'au moins un paramètre (P1-P8) à l'aide du fichier de description (70) par le module d'application source (30), dans lequel le module d'application source (30) indique dans le fichier de configuration (72) une zone de données, à lire de la mémoire d'appareil de commande (94), plus grande par rapport à la taille de données (S1-S8) de l'au moins un paramètre (P1-P8), qui est directement contiguë par le haut et/ou par le bas à la zone de la mémoire d'appareil de commande (94) adressable par l'adresse de mémoire (A1-A8) de l'au moins un paramètre (P1-P8) et définie par la taille de données (S1-S8) de celui-ci.

2. Procédé selon la revendication 1, **caractérisé en ce que**, dans le fichier de mesure (74), est contenu un identifiant (IB) caractérisant le fichier de description (70).

3. Procédé selon la revendication 2, **caractérisé par** l'affichage des données de notification (83) sur une interface utilisateur (51) du module d'application cible (50).

4. Procédé selon la revendication 2 ou 3, **caractérisé par** l'association d'au moins une autre information associée à l'au moins un paramètre (P1-P8) aux données de notification (83) associées à l'au moins un paramètre (P1-P8) à l'aide du fichier de description (70) et/ou par le classement des données de notification (83) de l'au moins un paramètre (P1-P8) dans une structure d'affichage ou une structure de données superposée définie par le fichier de description (70) et/ou par la conversion des données de notification (83) à l'aide d'une instruction du fichier de description (70) par le module d'application source (30).

5. Procédé selon l'une quelconque des revendications précédentes, **caractérisé en ce que** le module d'application source (30) indique à la place de l'adresse de mémoire (A1-A8) de l'au moins un paramètre (P1-P8) une adresse de mémoire (A1-A8) dans la zone de données étendue dans le fichier de configuration (72).

6. Procédé selon l'une quelconque des revendications précédentes, **caractérisé par** la fourniture d'un menu de sélection (32) pour la sélection de l'au moins un paramètre (P1-P8) par un utilisateur sur une interface utilisateur graphique (31, 51) du module d'application source (30) ou par le module d'application source (30).

7. Procédé selon l'une quelconque des revendications précédentes, **caractérisé en ce que** l'au moins un paramètre (P1-P8) forme une partie intégrante d'une structure de paramètre (PS) ou d'une structure de mémoire et **en ce que**, sur l'interface utilisateur graphique (31, 51), une sélection de l'au moins un paramètre (P1-P8), en cas de besoin, d'au moins un second paramètre (P1-P8), à partir de la structure de paramètre (PS) ou de la structure de mémoire est offert de sorte que, dans le fichier de configuration (72), uniquement une partie de la structure de paramètre (PS) ou de la structure de mémoire est indiquée pour la modification et/ou lecture à partir de la mémoire d'appareil de commande (94).

8. Procédé selon l'une quelconque des revendications précédentes, **caractérisé en ce que** le module d'application source (30) indique au moins une condition de déclenchement (T1, T4), en particulier une valeur limite ou une courbe, pour l'au moins un paramètre à mesurer (P1-P8) dans le fichier de configuration (72).

9. Procédé selon l'une quelconque des revendications précédentes, **caractérisé en ce que** le module d'application source (30) génère le désignateur anonyme (X1-X4, X6) par exécution d'au moins une règle de conversion et/ou à l'aide d'un tableau d'associations et/ou **en ce que** le désignateur anonyme (X1-X4, X6) comporte l'adresse de mémoire (A1-A8) et/ou la taille de données (S1-S8) de l'au moins un paramètre (P1-P8) ou est formé pour cela.

10. Procédé selon l'une quelconque des revendications précédentes, **caractérisé en ce que** le fichier de description (70) est un fichier ASAP2 et/ou le protocole d'étalonnage est un protocole CCP (protocole de calibration CAN) ou un protocole XCP (protocole de calibration X) transférable ou basé sur un CAN (Controller Area Network) ou Ethernet ou Flexray ou similaire et/ou **en ce qu'**un identifiant (IB) caractérisant le fichier de description (70) est contenu dans le fichier de configuration (72).

11. Module d'application source (30) pour la communication de données avec un appareil de commande (90) d'un véhicule automobile (5) selon le procédé selon l'une quelconque des revendications précédentes, dans lequel l'appareil de commande (90) exécute un programme de commande (95) pour la commande et/ou la surveillance d'au moins une fonction en particulier du véhicule automobile (5), dans lequel il est prévu pour la lecture et/ou pour la modification de données du programme de commande (95) un fichier de description (70) dans lequel sont contenus des noms de paramètre (I1-I8) de paramètres (P1-P8) du programme de commande (95) et des adresses de mémoire (A1-A8) associées aux paramètres respectifs (P1-P8), dans lequel le programme de commande (95) dépose le paramètre respectif (P1-P8) dans une mémoire d'appareil de commande (94) de l'appareil de commande (90), dans lequel le module d'application source (30) comprend
- des moyens de génération (34) pour la génération d'un fichier de configuration (72) pour un module d'application cible (50) distant spatialement en vue d'une communication de données avec l'appareil de commande (90) à l'aide du fichier de description (70) par le biais du module d'application source (30), dans lequel dans le fichier de configuration (72) sont indiqués pour au moins un paramètre (P1-P8) du fichier de description (70) un désignateur anonyme (X1-X4, X6) en alternative à son nom de paramètre (I1-I8), anonymisant le nom de paramètre (I1-I8), l'adresse de mémoire (A1-A8) et la taille de données (S1-S8) de l'au moins un paramètre (P1-P8) dans la mémoire d'appareil de commande et une information de commande (C, R) si l'au moins un paramètre (P1-P8) dans la mémoire d'appareil de commande (94) doit être modifié et/ou lu, et
- des moyens de transmission (35) pour la transmission du fichier de configuration (72) du module d'application source (30) au module d'application cible (50) par le biais d'une ligne de communication ou d'un support de données, de manière que le module d'application cible (50) peut exécuter une communication du module d'application cible (50) avec l'appareil de commande (90) au moyen d'un protocole d'étalonnage, dans lequel le module d'application cible (50) envoie à l'appareil de commande (90), en fonction de l'information de commande (C, R) associé à l'au moins un paramètre (P1-P8), au moins une instruction de commande (80, 81) pour la modification de l'au moins un paramètre (P1-P8) dans la mémoire d'appareil de commande (94) ou pour la lecture de l'au moins un paramètre (P1-P8) de la mémoire d'appareil de commande (94) à l'aide du fichier de configuration (72),
dans lequel les moyens de transmission (35) sont conçus pour la réception ou la lecture d'un fichier de mesure (74) dans lequel sont contenues des données de notification (83), associées à au moins un paramètre (P1-P8), que le module d'application cible (50) fournit à l'aide d'un message (82) du protocole d'étalonnage, reçu par l'appareil de commande (90), dans lequel sont contenues des données de notification (83), associées à l'au moins un paramètre (P1-P8) à lire, provenant de la mémoire d'appareil de commande (94),
- dans lequel le module d'application source (30) comprend une interface utilisateur (51) pour l'affichage des données de notification (83) et pour l'association du nom de paramètre (I1-I8) aux données de notification (83) associées à l'au moins un paramètre (P1-P8) à l'aide du fichier de description (70),
- et dans lequel le module d'application source (30) indique dans le fichier de configuration (72) une zone de données, à lire de la mémoire d'appareil de commande (94) plus grande par rapport à la taille de données (S1-S8) de l'au moins un paramètre (P1-P8), qui est directement contiguë par le haut et/ou par le bas à la zone de la mémoire d'appareil de commande (94) adressable par l'adresse de mémoire (A1-A8) de l'au moins un paramètre (P1-P8) et définie par la taille de données (S1-S8) de celui-ci.

12. Module d'application cible (50) pour la communication de données avec un module d'application source (30) selon la revendication 11 et avec un appareil de commande (90) d'un véhicule automobile (5) selon le procédé selon l'une quelconque des revendications 1 à 12, dans lequel l'appareil de commande (90) exécute un programme de commande (95) pour la commande et/ou la surveillance au moins d'une fonction du véhicule automobile (5), dans lequel il est prévu pour la lecture et/ou pour la modification de données du programme de commande (95) un fichier de description (70) dans lequel sont contenus des noms de paramètre (I1-I8) de paramètres (P1-P8) du programme de commande (95) et des adresses de mémoire (A1-A8) associées aux paramètres respectifs (P1-P8), dans lequel le programme de commande (95) dépose le paramètre respectif (P1-P8) dans une mémoire d'appareil de commande (94) de l'appareil de commande (90), dans lequel le module d'application cible (50) comprend
- des moyens de transmission (55) pour la réception d'un fichier de configuration (72) par le biais d'une ligne de communication ou d'un support de données en provenance du module d'application source (30) distant spatialement, dans lequel le fichier de configuration (72) est prévu pour une communication de données du module d'application cible (50) avec l'appareil de commande (90) et dans lequel dans le fichier de configuration (72) sont indiqués pour au moins un paramètre (P1-P8) du fichier de description (70) un désignateur anonyme (X1-X4, X6) en alternative à son nom de paramètre (I1-I8), anonymisant le nom de paramètre (I1-I8), l'adresse de mémoire (A1-A8) et la taille de données (S1-S8) de l'au moins un paramètre (P1-P8) dans la mémoire d'appareil de commande (94) et une information de commande (C, R) si l'au moins un paramètre (P1-P8) dans la mémoire d'appareil de commande (94) doit être modifié et/ou lu,
- des moyens de communication (60) pour une communication du module d'application cible (50) avec l'appareil de commande (90) au moyen d'un protocole d'étalonnage, dans lequel le module d'application cible (50) envoie à l'appareil de commande (90), en fonction de l'information de commande (C, R) associée à l'au moins un paramètre (P1-P8), au moins une instruction de commande (80, 81) pour la modification de l'au moins un paramètre (P1-P8) dans la mémoire d'appareil de commande (94) ou pour la lecture de l'au moins un paramètre (P1-P8) de la mémoire d'appareil de commande (94) à l'aide du fichier de configuration (72), dans lequel les moyens de transmission (55) sont conçus pour la transmission d'un fichier de mesure (74) du module d'application cible (50) au module d'application source (30), dans lequel les données de notification (83) associées à l'au moins un paramètre (P1-P8) sont contenues dans le fichier de mesure (74),
- dans lequel dans le fichier de configuration (72) est indiquée par le module d'application source (30) une zone de données, à lire de la mémoire d'appareil de commande (94), plus grande par rapport à la taille de données (S1-S8) de l'au moins un paramètre (P1-P8), qui est directement contiguë par le haut et/ou par le bas à la zone de la mémoire d'appareil de commande (94) adressable par l'adresse de mémoire (A1-A8) de l'au moins un paramètre (P1-P8) et définie par la taille de données (S1-S8) de celui-ci.

13. Module d'application source (30) selon la revendication 11 ou module d'application cible (50) selon la revendication 12, **caractérisé en ce que** le module d'application respectif comprend un code de programme exécutable par un processeur (16) ou est formé par un code de programme de ce genre.
